(19) Europäisches Patentamt European Patent Office Office européen des brevets

(11) **EP 2 529 093 B1**

(12) **EUROPEAN PATENT SPECIFICATION**

(45) Date of publication and mention of the grant of the patent:
**27.05.2020 Bulletin 2020/22**

(21) Application number: **11737361.3**

(22) Date of filing: **25.01.2011**

(51) Int Cl.:
*F01N 11/00* (2006.01)     *F01N 3/20* (2006.01)
*F01N 9/00* (2006.01)

(86) International application number:
**PCT/SE2011/050070**

(87) International publication number:
**WO 2011/093772 (04.08.2011 Gazette 2011/31)**

(54) **ESTIMATION OF NITROGEN OXIDES AND AMMONIA**

MESSUNG VON STICKOXIDEN UND AMMONIAK

EVALUATION DES OXYDES D'AZOTE ET DE L'AMMONIAC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2010 SE 1050085**

(43) Date of publication of application:
**05.12.2012 Bulletin 2012/49**

(73) Proprietor: **Scania CV AB**
**151 87 Södertälje (SE)**

(72) Inventor: **WESTERBERG, Björn**
**S-151 48 Södertälje (SE)**

(74) Representative: **Scania CV AB**
**Patents, GP 117kv**
**151 87 Södertälje (SE)**

(56) References cited:
**DE-A1- 10 301 606     US-A1- 2004 098 968**
**US-A1- 2009 199 541**

• **DEVARAKONDA M. ET AL.: 'Model-based control system design in a urea-SCR aftertreatment system based on NH3 sensor feedback.' INTERNATIONAL JOURNAL OF AUTOMOTIVE TECHNOLOGY vol. 10, no. 6, 2009, pages 653 - 662, XP055129239**
• **WANG D. A. ET AL.: 'Ammonia Sensor for Closed-Loop SCR Control.' SAE TECHNICAL PAPER SERIES 2008-01-0919. 2008 WORLD CONGRESS, DETROIT, MICHIGAN. APRIL 14-17, 2008 14 April 2008, XP055129241**
• **KOBAYASHI N. ET AL.: 'Development of Simultaneous NOx/NH3 Sensor in Exhaust Gas.' TECHNICAL REVIEW vol. 38, no. 3, October 2001, pages 126 - 130, XP055129249**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

The present invention relates to a method for estimation of respective concentrations of nitrogen oxides $NO_X$ and concentrations of ammonia $NH_3$ in exhaust gases downstream from a catalyst, according to the preamble of claim 1.

The present invention relates also to a system for estimation of respective concentrations of nitrogen oxides $NO_X$ and concentrations of ammonia $NH_3$ in exhaust gases downstream from a catalyst, according to the preamble of claim 15.

**Background**

In substantially all of today's motor vehicles, e.g. cars, trucks, buses and other vehicles, a catalyst is used to clean exhaust gases from an engine of the vehicle. The use of catalysts is important for keeping below the emission limit values laid down by authorities and laws in different countries or regions.

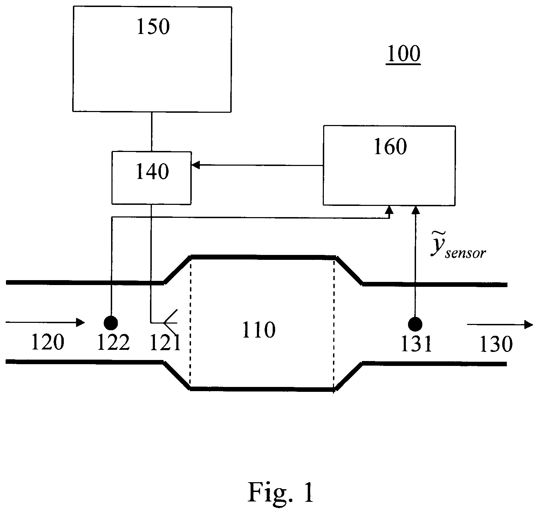

Figure 1 depicts schematically a catalyst system 100 which is implementable in substantially all types of motor vehicles. In the catalyst system 100, a catalyst 110 is so arranged that exhaust gases 120 upstream from the catalyst, which come from an engine, pass through the catalyst 110. Exhaust gases 130 which have passed the catalyst then proceed towards an exhaust pipe of the vehicle. The catalyst system 100, which comprises an SCR (selective catalytic reduction) catalyst 110, doses a reducing agent, usually in the form of urea, before the catalyst 110. The reducing agent is thus supplied to the exhaust gases 120 which have not yet passed through the catalyst 110. This dosing is effected in the catalyst system 100 by means of a dosing nozzle 121 which is supplied with the reducing agent from a tank 150. In the system exemplified below the reducing agent supplied is urea and the tank 150 takes the form of a urea tank 150.

The urea is usually in the form of an aqueous solution which is vaporised and decomposes to form ammonia. The ammonia then constitutes the active reducing agent in the catalyst 110 and reacts with nitrogen oxides $NO_X$ in the exhaust gases to form nitrogen gas and water. Nitrogen oxides $NO_X$ comprises here and throughout this specification both nitrogen monoxide $NO$ and nitrogen dioxide $NO_2$. For the desired reaction in the catalyst 110 a stoichiometric relationship prevails between the ammonia formed and the nitrogen oxides $NO_X$ in the exhaust gases which are to be cleaned. One ammonia molecule is needed for each molecule of nitrogen oxides $NO_X$. For the catalyst process to be effective, the concentration of ammonia, and hence also the amount of urea dosed, has therefore to correspond to and track the concentration of nitrogen oxides $NO_X$ in the exhaust gases which it is desired to clean.

The concentration of nitrogen oxides $NO_X$ in the exhaust gases 120 before the catalyst, and also the operating conditions, e.g. the temperature, vary over time. These variations may depend for example on how the vehicle is run and on the surrounding temperature. For example, the ability of the catalyst to accumulate ammonia varies with temperature, so its ability to accumulate ammonia is greater at low temperatures than at high temperatures. The dosing of urea has to be balanced with these variations to achieve desired cleaning of the exhaust gases. For example, higher dosage of urea is required if the temperature goes down and lower dosage if the temperature goes up. The urea dosage has therefore to be adjusted to achieve an effective stoichiometric catalyst process and counteract the presence of nitrogen oxides $NO_X$ and/or ammonia in the exhaust gases 130 which flow from the exhaust pipe after the catalyst.

To be able to calculate the amounts of urea dosage needed, their regulation is adapted to the concentration of nitrogen oxides $NO_X$ in exhaust gases 120 upstream from the catalyst 110, i.e. the exhaust gases which the system 100 receives from the engine, and several different methods may be used for necessary amounts of accumulated ammonia. One such regulating method uses a model of the catalyst 110 which comprises conditions for the catalyst, e.g. temperatures, and amounts of ammonia accumulated in the catalyst. A description of such a catalyst model appears below. Model-based control systems have also been disclosed in DE10301606 A1 and in Devarakonda M et. al.."Model-based control system design in a urea-SCR aftertreatment system based on NH3 sensor feedback". Another regulating method is based on feedback in combination with a precontrol which is itself based on input data such as engine speed, torque, exhaust flow, or temperature, and uses tabulated regulating values.

The concentration of nitrogen oxides $NO_X$ upstream from the catalyst 110 may be determined by using a $NO_x$ detecting sensor 122 so situated that it comes into contact with the exhaust gases 120 before they pass the catalyst 110. The concentration of nitrogen oxides $NO_X$ in the exhaust gases 120 from the engine may also be determined by using a model which describes the concentration of nitrogen oxides $NO_X$ at each operating point.

The calculation of amounts of urea dosage needed may also take into account the exhaust flow from the engine. The exhaust flow can be measured but may also be calculated on the basis of operating parameters such as engine speed, charging pressure, intake temperature and amounts of fuel injected.

It is important to be able to diagnose the catalyst's function, which may change over time, e.g. with age. The catalyst model may be used in such diagnosis.

Figure 1 depicts schematically a sensor 122 which may comprise a temperature sensor and a $NO_X$ sensor and which is so situated that it comes into contact with the exhaust gases from the engine 120. The schematically illustrated sensor 122 may here detect concentrations of nitrogen oxides $NO_X$ and/or temperatures and/or the flow for the exhaust gases 120. In Figure 1 the sensor 122 is schematically depicted as being situated upstream from the dosing nozzle 121. However, the temperature sensor comprised in the sensor 122 may be situated either upstream or downstream from the dosing nozzle 121. The $NO_X$ sensor comprised in sensor 122 should nevertheless be situated upstream from the dosing nozzle to avoid being affected by the dosing. The sensor 122 supplies to a control unit 160 one or more signals representing concentrations of nitrogen oxides $NO_X$ and/or temperatures and/or flow for the exhaust gases 120. The sensor 122 may be situated both before and after the dosing nozzle 121. The control unit 160 may be adapted to controlling an operating means (actuator) 140 which is in communication with a urea tank 150 and with the dosing nozzle 121. The operating means 140 regulates the flow of urea from the urea tank 150 to the dosing nozzle 121 according to the control signals delivered by the control unit 160 to the operating means 140.

The control unit 160 is also adapted to receiving a signal $\tilde{y}_{sensor}$ from an $NO_X$ sensor 131 which is so situated that it comes into contact with exhaust gases 130 downstream from the catalyst 110, i.e. with exhaust gases which have passed the catalyst 110, and which is intended to detect nitrogen oxides $NO_X$, i.e. both nitrogen monoxide $NO$ and nitrogen dioxide $NO_2$, in these exhaust gases 130. The signal $\tilde{y}_{sensor}$ from the $NO_X$ sensor 131 downstream from the catalyst 110 may be used by the control unit 160 for feedback regulation of urea dosage, which may be implemented with or without use of a catalyst model. The signal $\tilde{y}_{sensor}$ from the $NO_X$ sensor 131 may also be used in diagnosis of the function of the catalyst 110.

A problem with the $NO_X$ sensor 131 is that it is cross-sensitive for ammonia $NH_3$, i.e. the magnitude of the sensor signal is determined by both the nitrogen oxide concentration and the ammonia concentration in the exhaust gases 130 downstream from the catalyst 110. The sensor signal $\tilde{y}_{sensor}$ received by the control unit 160 from the $NO_X$ sensor 131 therefore depends on both the $NO_X$ concentration and the ammonia concentration in the exhaust gases, making it difficult to use the sensor signal for regulating and diagnostic purposes.

**Brief description of the invention**

An object of the present invention is to propose, for estimation of concentrations of nitrogen oxides $NO_X$ and concentrations of ammonia $NH_3$, a method and a system which wholly or partly solve the problems mentioned above.

This object is achieved by a method for estimation of concentrations of nitrogen oxides $NO_X$ and concentrations of ammonia $NH_3$ according to the characterising part of claim 1.

The object is also achieved by a system for estimation of concentrations of nitrogen oxides $NO_X$ and concentrations of ammonia $NH_3$ according to the characterising part of claim 17.

The object is also achieved by a computer programme and a computer programme product which implement the method according to the invention.

According to the invention, an estimated signal is derived on the basis of the catalyst model and corresponds to the sensor signal $\tilde{y}_{sensor}$ from the $NO_X$ sensor 131. At least two estimation functions and one or more deviation parameters are also defined. The at least two estimation functions together with the various deviation parameters have different relations to the sensor signal $\tilde{y}_{sensor}$ and are used to describe how deviations (differences) between the model and reality affect the relations between respective modelled concentrations of nitrogen oxides $NO_X$ and ammonia $NH_3$ and the sensor signal $\tilde{y}_{sensor}$ from the cross-sensitive $NO_X$ sensor 131. According to the invention this may be used to distinguish how much of the measured sensor signal $\tilde{y}_{sensor}$ depends on the respective concentrations of nitrogen oxides $NO_X$ and ammonia $NH_3$.

Deviation parameters are determined by comparing the measured sensor signal $\tilde{y}_{sensor}$ and the corresponding estimated signal. The deviation parameters thus determined are then used for estimating the respective concentrations of nitrogen oxides $NO_X$ and ammonia $NH_3$. On the basis of the sensor signal from the $NO_X$ sensor, the present invention thus arrives at respective separate estimated values for the concentration of nitrogen oxides $NO_X$ and the concentration of ammonia $NH_3$. The one or more deviation parameters describe systematic deviations for the model variables. The estimation of deviation parameters may according to the present invention be done continuously, allowing continuous estimation of respective separate concentrations for nitrogen oxides $NO_X$ and ammonia $NH_3$ downstream from the catalyst.

By using information from the catalyst model in conjunction with signal processing, the present invention thus makes it possible for the concentration of nitrogen oxides $NO_X$ and the concentration of ammonia $NH_3$ to be respectively separated from the sensor signal provided by a $NO_X$ sensor which is cross-sensitive for both nitrogen oxides $NO_X$ and ammonia $NH_3$. The cross-sensitivity of the $NO_X$ sensor is thus converted from a problem to an asset in that the $NO_X$ sensor thus serves simultaneously as sensor for both nitrogen oxides $NO_X$ and ammonia $NH_3$.

The present invention makes it possible to arrive at respective separate values for the concentration of nitrogen oxides $NO_X$ and the concentration of ammonia $NH_3$, which means that urea dosage regulation can be made robust irrespective of whether the regulation is model-based or not. The advantage of the separate values is therefore a major asset both in systems where a catalyst model is used for the actual regulation and in systems which are based on precontrol via tabulated values in combination with feedback of the separate values. The potentially robust urea dosage regulation according to the present invention makes it possible not only to reduce urea consumption but also to effectively meet the emission requirements.

The fact that exhaust cleaning becomes very effective when the present invention is used means that the emission requirements can be achieved with a smaller catalyst. A smaller catalyst also means less backpressure for the engine, resulting in less fuel consumption. The invention also improves the possibility of monitoring correct operation for the whole of the system which comprises the urea tank 150, operating means 140, the dosing nozzle 121 and the catalyst 110.

The respective separate values for the concentration of nitrogen oxides $NO_x$ and the concentration of ammonia $NH_3$ which are arrived at by the present invention may also be used to achieve reliable diagnosis of the catalyst's function.

According to an embodiment of the present invention, one of at least two estimation functions takes the form of an estimation function for nitrogen oxides $f_{NO_{3x}}$. This estimation function for nitrogen oxides $f_{NO_{3x}}$ depends on a material balance for a modelled reaction in the catalyst model.

According to an embodiment of the present invention, one of at least two estimation functions takes the form of an estimation function for ammonia $f_{NH_3}$. This estimation function for ammonia $f_{NH}$ depends on an equilibrium between modelled adsorbed ammonia and modelled ammonia in gaseous form at an outlet end of the catalyst.

Defining and using these estimation functions for nitrogen oxides $f_{NO_{3x}}$ and ammonia $f_{NH_3}$ makes separate estimation possible of the respective concentrations of nitrogen oxides $NO_X$ and ammonia $NH_3$ downstream of the catalyst 110.

In many applications it is extremely important to have access to these separate estimated values. Having reliable measured values available for the concentration of nitrogen oxides $NO_X$ or for the concentrations of both nitrogen oxides $NO_X$ and ammonia $NH_3$ makes monitoring and feedback of the catalyst's function possible. The problem in cases where, as in prior art, it is not possible to separate the sensor signal into concentrations of nitrogen oxides $NO_X$ and concentrations of ammonia $NH_3$ is that incorrect interpretation of ammonia $NH_3$ as nitrogen oxides $NO_X$ or vice versa may result in dangerous incorrect assessment of the condition of the catalyst.

An example which may be cited is that higher dosage reduces the concentration of nitrogen oxides $NO_X$ after the catalyst and increases the concentration of ammonia $NH_3$ after the catalyst. At lower dosage the relationship is reversed, i.e. the concentration of nitrogen oxides $NO_X$ after the catalyst increases and the concentration of ammonia $NH_3$ after the catalyst decreases. If then the sensor signal on a certain occasion increases, a correct dosage alteration needs to be determined. Dosage alterations required therefore differ depending on whether it is the concentration of nitrogen oxides $NO_X$ after the catalyst or the concentration of ammonia $NH_3$ after the catalyst that increases, so it is important to have access to separate values for these concentrations.

The measured value for the concentration of nitrogen oxides $NO_X$ after the catalyst provides information about the conversion across the catalyst, which depends on all the conditions in the catalyst (to different extents). The measured value for the concentration of ammonia $NH_3$ after the catalyst provides information about the condition at the outlet end of the catalyst. Having separate values available for the concentrations of both nitrogen oxides $NO_X$ and ammonia $NH_3$ therefore provides fuller information about the catalyst than having access to only the measured value for nitrogen oxides $NO_X$. Access to only the concentration of ammonia $NH_3$ also provides incomplete information, since the measured value is often zero.

### Brief list of drawings

The invention is explained in more detail below with reference to the attached drawings, in which:

Figure 1 is a schematic drawing of a catalyst system,
Figure 2 is a flowchart for the method according to the present invention,
Figure 3 depicts schematically a control unit, and
Figure 4 depicts a tank series model of the catalyst.

### Description of preferred embodiments

The method according to the present invention comprises an estimation of the concentration of nitrogen oxides $NO_X$ and the concentration of ammonia $NH_3$ in the exhaust gases 130 downstream from the catalyst 110. This estimation is based on the sensor signal $\tilde{y}_{sensor}$ provided by the $NO_X$ sensor 131, and on the catalyst model. On the basis of signals $\tilde{y}_{sensor}$ from the cross-sensitive $NO_X$ sensor 131, the estimation therefore provides values for the concentration of both nitrogen oxides $NO_X$ and ammonia $NH_3$ for exhaust gases downstream from the catalyst 110.

The $NO_X$ sensor 131 has approximately the same sensitivity for nitrogen monoxide $NO$ (standardised sensitivity with the value 1) as for ammonia $NH_3$ (standardised sensitivity with the value 1) but somewhat lower sensitivity for nitrogen dioxide $NO_2$ (standardised sensitivity with the value 0.7). After an effective catalyst process, however, what is normally left in the exhaust gases is mostly carbon monoxide $NO$. In situations where ammonia is released from the catalyst, which normally happens when there are rapid temperature rises, these cross-sensitivities make it difficult to assess the actual $NO_X$ concentration in the exhaust gases 130 after the catalyst. This reduces the potential for successfully using the $NO_X$ sensor for feedback and on-board diagnostics (OBD), i.e. diagnosis of the function of the catalyst 110 and the relating system 100.

There follows a description of a catalyst model. As specialists will appreciate, catalyst models can be set up in many different ways, the model described here being an example. A list of variables and indices used in the description of the catalyst model appears at the end of the description.

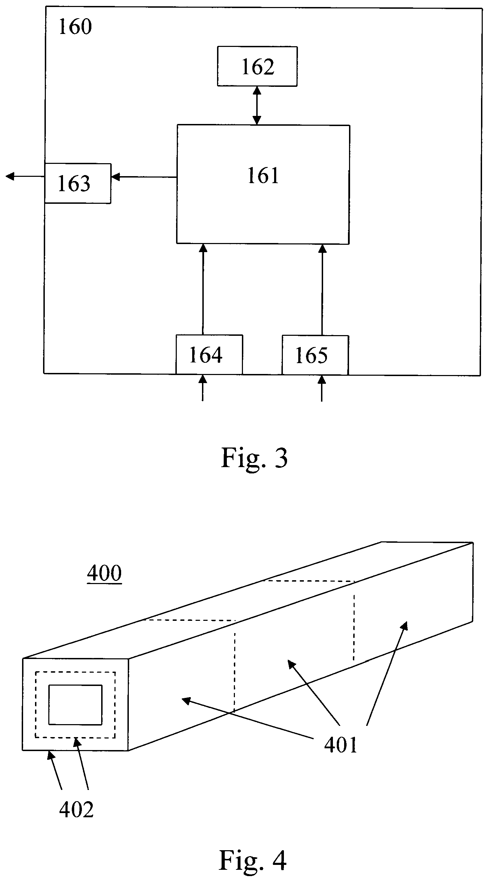

The catalyst model is formulated as a tank series model in which active material is divided into layers. Such a tank series model 400 is depicted schematically in Figure 4. The tank series model 400 is here divided into a number of tanks 401 from inlet to outlet. The duct wall is also divided into a number of layers 402 of active material.

The catalyst model is therefore a spatially resolved model which caters for how model variables for the catalyst vary from the catalyst's inlet, along the catalyst, to the catalyst's outlet, and through the active material from the surface and in towards the centre of the duct wall. This spatial resolution of the model makes it possible to achieve a very good match between the catalyst model and reality, since variations for conditions and concentrations along the catalyst and through the duct wall can be modelled. This match is specifically better in brief and passing operating situations, known as transient situations, which cause successive changes in the catalyst, from its inlet to its outlet. For example, information about temperature and/or accumulated ammonia $NH_3$ in the various parts of the catalyst is obtainable from this spatially resolved model of the catalyst.

The catalyst model covers the following reactions:

$$Urea + H_2O \rightarrow 2NH_3 + CO_2 \qquad (eq.\ 1)$$

$$S + NH_3 \rightarrow S - NH_3 \qquad (eq.\ 2)$$

$$S - NH_3 \rightarrow S + NH_3 \qquad (eq.\ 3)$$

$$4S - NH_3 + 4NO + O_2 \rightarrow 4S + 6H_2O + 4N_2 \qquad (eq.\ 4)$$

$$4S - NH_3 + 5O_2 \rightarrow 4S + 6H_2O + 4NO \qquad (eq.\ 5)$$

The model also covers urea decomposition (the first reaction) from the dosing nozzle 121 to the catalyst 110. The model applies the simplification that the isocyanic acid (HNCO) formed by urea decomposition is treated as match with ammonia.

The urea decomposition is treated as a homogeneous reaction with the reaction rate

$$r_{h,u,k} = k_{u,k} \cdot c_{tot,k} \cdot y_{Urea,k,0} \qquad (eq.6)$$

Other reactions are catalytic. The reaction rate for adsorption in tank k and layer n is expressed as

$$r_{c,a,k,n} = k_{a,k} \cdot c_{tot,k} \cdot y_{NH_3,k,n} \cdot \left(1 - \theta_{k,n}\right) \qquad (eq.\ 7)$$

The reaction rate for desorption in tank k and layer n is expressed as

$$r_{c,d,k,n} = k_{d,k} \cdot \theta_{k,n} \qquad (eq.\ 8)$$

The reaction rate for $NO_X$ reduction in tank k and layer n is expressed as

$$r_{c,r,k,n} = k_{r,k} \cdot c_{tot,k} \cdot y_{NO_x,k,n} \cdot \theta_{k,n} \qquad \text{(eq. 9)}$$

The reaction rate for ammonia oxidation in tank k and layer n is expressed as

$$r_{c,o,k,n} = k_{o,k} \cdot c_{tot,k} \cdot \theta_{k,n} \qquad \text{(eq. 10)}$$

The rate constant for both homogeneous and catalytic reactions is determined from the Arrhenius equation as

$$k_{j,k} = k_{0,j} \cdot e^{-\frac{E_{A,j}}{R \cdot T_{s,k}}} \qquad \text{(eq. 11)}$$

The total gas concentration is determined from the general gas law as

$$c_{tot,k} = \frac{P_k}{R \cdot T_{s,k}} \qquad \text{(eq. 12)}$$

The total pressure $P_k$ may be added to the pressure after the catalyst 110 which is equal to atmospheric pressure if the catalyst is situated last in the exhaust system. For a more accurate value, the pressure drop from the respective tank to the end of the catalyst is calculated from formulae for laminar flow in a duct and is added to the pressure after the catalyst. If the catalyst is not last in the system, the pressure may be measured or calculated from pressure drops across the unit or units situated after the catalyst.

For the catalyst the following material balance of the gas flow may be set up for substance i:

$$F \cdot \left( y_{i,k-1,0} - y_{i,k,0} \right) - \Gamma_{i,k,0} \cdot \left( y_{i,k,0} - y_{i,k,1} \right) + \sum_j v_{i,j} \cdot r_{h,j,k} \cdot V_k = 0 \qquad \text{(eq. 13)}$$

The following material balance of the gas phase in layer n may be set up for substance i (ignoring homogeneous reactions):

$$\Gamma_{i,k,n-1} \cdot \left( y_{i,k,n-1} - y_{i,k,n} \right) - \Gamma_{i,k,n} \cdot \left( y_{i,k,n} - y_{i,k,n+1} \right) + \sum_j v_{i,j} \cdot r_{c,j,k,n} \cdot w_{k,n} = 0 \qquad \text{(eq. 14)}$$

For the innermost layer the second term drops out as follows:

$$\Gamma_{i,k,N-1} \cdot \left( y_{i,k,N-1} - y_{i,k,N} \right) + \sum_j v_{i,j} \cdot r_{c,j,k,N} \cdot w_{k,N} = 0 \qquad \text{(eq. 15)}$$

The material balances for the gas flow and for the gas phase in the active layers form an equation system from which mole fractions are determined for the various substances in the gas flow and in the gas phase in the active layers. The mass transfer coefficient for transfer between the gas flow and the first layer is determined as

$$\Gamma_{i,k,0} = \frac{A_{ch,k} \cdot c_{tot,k}}{\dfrac{1}{k_{c,i,k}} + \dfrac{0.5 \cdot \Delta x_1}{D_{eff,i,k}}} \qquad \text{(eq. 16)}$$

The mass transfer coefficient for transfer between layers is determined as

$$\Gamma_{i,k,n} = \frac{2 \cdot D_{eff,i,k} \cdot A_{ch,k} \cdot c_{tot,k}}{\Delta x_n + \Delta x_{n+1}} \qquad \text{(eq. 17)}$$

The film transfer coefficient is determined as

$$k_{c,i,k} = \frac{Sh \cdot D_{i,k}}{d} \qquad \text{(eq. 18)}$$

For the Sherwood number *Sh,* asymptotic values for the respective duct geometry may be used. The ordinary diffusivity is determined as

$$D_{i,k} = D_{ref,i} \cdot \left[ \frac{T_{s,k}}{T_{ref}} \right]^{1.75} \qquad \text{(eq. 19)}$$

The Knudsen diffusivity is determined as

$$D_{K,i,k} = \frac{d_p}{3} \cdot \sqrt{\frac{8 \cdot R \cdot T_{s,k}}{\pi \cdot M_i}} \qquad \text{(eq. 20)}$$

The effective diffusivity is determined as

$$D_{eff,i,k} = \frac{f_D}{\frac{1}{D_{i,k}} + \frac{1}{D_{K,i,k}}} \qquad \text{(eq. 21)}$$

The time-dependent material balance for adsorbed ammonia gives the time derivative for degree of coverage as

$$\frac{d\theta_{k,n}}{dt} = \frac{1}{N_c} \cdot \sum_j \nu_{S-NH_3,j} \cdot r_{c,j,k,n} \cdot w_{k,n} \qquad \text{(eq. 22)}$$

The degree of coverage at each point in time is then integrated on the basis of the time derivative. The temperature in the gas flow through the catalyst 110 is determined by solving a heat balance which takes into account the heat transferred to the solid material and the reaction heat for homogeneous reactions. The effect from the reaction heat for homogeneous reactions is determined as

$$Q_{h,k} = \sum_j r_{h,k} V_k \left( -\Delta H_j \right) \qquad \text{(eq. 23)}$$

The heat balance for the gas flow is then solved by

$$T_{g,k} = \frac{F \cdot c_{p,g} \cdot T_{g,k-1} + h_k \cdot A_{ch,k} \cdot T_{s,k} + Q_{h,k}}{F \cdot c_{p,g} + h_k \cdot A_{ch,k}} \qquad \text{(eq. 24)}$$

in which the heat transfer coefficient is determined as

$$h_k = \frac{Nu \cdot \lambda_g}{d} \qquad \text{(eq. 25)}$$

For the Nusselt number *Nu*, asymptotic values for the respective duct geometry may be used.
The effect from the reaction heat for catalytic reactions is determined as

$$Q_{c,k} = \sum_n \sum_j r_{c,j,k,n} \cdot w_{k,n} \cdot (-\Delta H_j) \qquad\qquad \text{(eq. 26)}$$

The time-dependent heat balance for the solid material in the catalyst gives the time derivative for temperature as

$$\frac{dT_{s,k}}{dt} = \frac{1}{m_{s,k} \cdot c_{p,s}} \left( h_k \cdot A_{ch,k} \cdot (T_{g,k} - T_{s,k}) + Q_{c,k} \right) \qquad\qquad \text{(eq. 27)}$$

The temperature at each point in time is then integrated on the basis of the time derivative.

If the catalyst model fully matches reality, it is relatively easy to assess the amount of content of the sensor signal $\tilde{y}_{sensor}$ from the $NO_X$ sensor 131 which pertains respectively to the nitrogen oxides $NO_X$ and the ammonia $NH_3$ in the exhaust gases 130. The catalyst model then indicates how much of the sensor signal $\tilde{y}_{sensor}$ is due to the nitrogen oxides $NO_X$ and how much to the ammonia $NH_3$. In addition, the aggregate of the values for the nitrogen oxides $NO_X$ and the ammonia $NH_3$ corresponds to the sensor signal $\tilde{y}_{sensor}$. If the catalyst model fully matches reality, it can therefore be used to obtain information about both the concentration of nitrogen oxides $NO_X$ and the concentration of ammonia $NH_3$ in the exhaust gases 130.

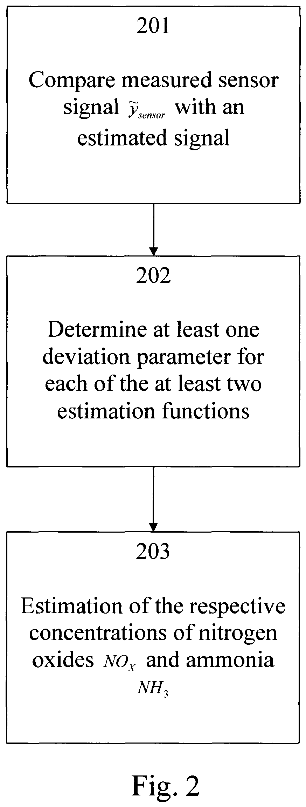

In contrast, if the catalyst model does not fully match reality, i.e. if the model deviates from reality, which it often does, it becomes instead very difficult to assess the amount of content of the sensor signal $\tilde{y}_{sensor}$ which relates respectively to the nitrogen oxides $NO_X$ and the ammonia $NH_3$. This is solved by the present invention. Figure 2 is a flowchart for a method for the present invention. A first step 201 of the method begins the estimation of the concentration of nitrogen oxides $NO_X$ and the concentration of ammonia $NH_3$ downstream from the catalyst by comparing the measured sensor signal $\tilde{y}_{sensor}$ with an estimated signal.

The estimated signal represents here the catalyst model's match with the signal $\tilde{y}_{sensor}$ measured by the cross-sensitive $NO_X$ sensor 131 located downstream of the catalyst 110 and depends on at least two estimation functions, which comprise an estimation function for nitrogen oxides $f_{NO_x}$ and an estimation function for ammonia $NH_3$. This comparison of the measured sensor signal $\tilde{y}_{sensor}$ with the estimated signal is then used in a second step 202 of the method to determine at least one deviation parameter for each of the at least two estimation functions. Each of these one or more deviation parameters describes a deviation for the catalyst model from reality.

The actual estimation of the concentration of nitrogen oxides $NO_X$ and the concentration of ammonia $NH_3$ is then done in a third step 203 of the method on the basis of the respective at least two estimation functions, i.e. for nitrogen oxides $NO_X$ based on the estimation function for nitrogen oxides $f_{NO_x}$ and for ammonia $NH_3$ based on an estimation function for ammonia $f_{NH_3}$, and on the basis of at least one of the deviation parameters determined by comparing the measured sensor signal $\tilde{y}_{sensor}$ with the estimated signal.

The invention thus uses a catalyst model which defines what an estimated signal of the model which corresponds to the signal signal $\tilde{y}_{sensor}$ from the $NO_X$ sensor 131 is like, in conjunction with at least two estimation functions and one or more deviation parameters. The at least two estimation functions together with the one or more deviation parameters describe how one or more deviations for the model from reality will affect the relations between respective modelled concentrations of nitrogen oxides $NO_X$ and ammonia $NH_3$ and the sensor signal $\tilde{y}_{sensor}$ from the $NO_X$ sensor 131. The various estimation functions together with the various deviation parameters have different relations to the sensor signal $\tilde{y}_{sensor}$. These differences may according to the invention be used to distinguish how much of the measured sensor signal $\tilde{y}_{sensor}$ is due to the respective concentrations of nitrogen oxides $NO_X$ and ammonia $NH_3$.

The invention thus determines one or more deviation parameters, each of which describes a difference between the catalyst model and reality and therefore indicates how the catalyst model deviates in some respect from reality. Comparing the measured sensor signal $\tilde{y}_{sensor}$ and the corresponding estimated signal determines the values for these one of more deviation parameters which might be used to correct the catalyst model or its input signals so as to achieve a match between the measured sensor signal $\tilde{y}_{sensor}$ and the estimated signal.

These values determined for these one or more deviation parameters are then used in the actual respective estimation of the concentration of nitrogen oxides $NO_X$ and the concentration of ammonia $NH_3$ to arrive at respective separate estimated values for the concentration of nitrogen oxides $NO_X$ and the concentration of ammonia $NH_3$ in the exhaust gases 130 downstream from the catalyst 110.

In prior art, the cross-sensitivity of the $NO_X$ sensor 131 for nitrogen oxides $NO_X$ and ammonia $NH_3$ present problems and difficulties. The present invention makes it possible instead to regard this cross-sensitivity as an asset in that it can be used to arrive at respective separate estimates of the concentration of nitrogen oxides $NO_X$ and the concentration of ammonia $NH_3$.

The method according to the invention is based on the difference between measured values for mole fractions (concentrations) after the catalyst 110 and corresponding values from the catalyst model being explainable by systematic deviation for one or more from among at least one input signal to the catalyst model, at least one variable and at least one condition in the catalyst model.

The one or more deviation parameters therefore describe systematic deviations for the model variables, i.e. systematic deviations for one or more from among at least one input signal, at least one variable and at least one condition for the catalyst model. The estimation of deviation parameters may according to the present invention be done continuously, allowing continuous estimation of respective separate concentrations for nitrogen oxides $NO_X$ and ammonia $NH_3$ downstream from the catalyst.

According to an embodiment of the present invention, the respective estimates of the concentration of nitrogen oxides $NO_X$ and the concentration of ammonia $NH_3$ according to the invention are used for feedback in model-based regulation of urea. According to another embodiment of the present invention, these estimates are used for feedback in non-model-based regulation of urea, i.e. in urea regulation based on precontrol by use of tabulated values. According to an embodiment of the invention, these estimates are used for diagnosis of the catalyst function. All these applications afford advantages in the respective forms of more robust regulation and more reliable diagnosis due to the possibility of using the respective separate estimates for the concentration of nitrogen oxides $NO_X$ and the concentration of ammonia $NH_3$.

According to the present invention, the catalyst model is thus used to arrive at the respective estimations of the concentration of nitrogen oxides $NO_X$ and the concentration of ammonia $NH_3$. According to various embodiments of the present invention, the catalyst model is also used in urea dosage regulation and/or catalyst function diagnosis.

According to an embodiment of the present invention, the at least two estimation functions comprise an estimation function for nitrogen oxides $f_{NO_x}$. This estimation function for nitrogen oxides $f_{NO_x}$ depends on a material balance for a modelled reaction in the catalyst model. Using this estimation function for nitrogen oxides $f_{NO_x}$ makes it possible according to the present invention to arrive at a separate estimate of the concentration of nitrogen oxides $NO_X$ downstream of the catalyst 110. This estimate of the concentration of nitrogen oxides $NO_X$ after the catalyst provides information about the conversion across the catalyst and makes reliable feedback and diagnosis of the catalyst possible.

This estimation function for nitrogen oxides $f_{NO_x}$ uses a deviation parameter $c_{NO_x}$ to relate a modelled concentration of nitrogen oxides $NO_X$ downstream of the catalyst 110 to the signal $\tilde{y}_{sensor}$ measured by the $NO_X$ sensor 131. This deviation parameter $c_{NO_x}$ describes the deviation of the input signal for the concentration of nitrogen oxides $NO_X$ upstream from the catalyst 110. According to this embodiment of the invention, the separate estimate of the concentration of nitrogen oxides $NO_X$ downstream of the catalyst 110 can therefore be corrected for errors in the model input signal for concentration of nitrogen oxides $NO_X$ upstream from the catalyst 110.

The estimation function for nitrogen oxides $f_{NO_x}$ thus depends on a deviation parameter $c_{NO_x}$ for concentrations of nitrogen oxides $NO_X$ upstream from the catalyst 110. The estimation function for nitrogen oxides $f_{NO_x}$ also depends on at least one deviation parameter for a conversion. The deviation parameter for conversion itself depends on at least one deviation parameter $c_\theta$ for degree of coverage of ammonia, and may also depend on a deviation parameter $c_T$ for temperature and/or on a deviation parameter $c_{k\tau}$ for activity or flow. The separate estimate of the concentration of nitrogen oxides $NO_X$ downstream of the catalyst 110 may therefore, by this embodiment of the present invention, be corrected for errors in the model input signal for concentrations of nitrogen oxides $NO_X$ upstream of the catalyst 110, for errors in the catalyst's modelled activity or the modelled input signal for flow, for errors in the model's condition for temperature and for errors in the model's condition for degree of coverage of ammonia.

The estimation function for nitrogen oxides may be derived from the material balance for a first-order reaction in a tank series. The estimation function then becomes a product arrived at by multiplying the deviation parameter $c_{NO_x}$ for nitrogen oxides $NO_X$ upstream from the catalyst 110 by the mole fraction for $NO_X$ upstream from the catalyst 110 and by a factor for each tank which describes how much of the $NO_X$ input remains after the respective tank:

$$f_{NO_x} = c_{NO_x} \cdot y_{NO_x,0} \cdot \prod_{k=1}^{K} \frac{1}{1 + (k\tau)_k \cdot f_{k\tau,k}} \qquad \text{(eq. 28)}$$

in which the conversion variable $(k\tau)_k$ represents a first-order rate constant multiplied by the dwell time and is determined from $NO_X$ input and output from the respective tank as

$$(k\tau)_k = \begin{cases} \dfrac{y_{NO_x,0}}{y_{NO_x,1,0}} - 1 & k = 1 \\[2ex] \dfrac{y_{NO_x,k-1,0}}{y_{NO_x,k,0}} - 1 & k \in [2,K] \end{cases} \qquad \text{(eq. 29)}$$

The deviation parameter for conversion gives the respective influences of deviation in activity/flow, degree of coverage of ammonia and temperature as

$$f_{k\tau,k} = c_{k\tau} \cdot \theta_{NH_3,k}{}^{1-c_\theta} \cdot e^{-\frac{E_A}{R \cdot T_{s,k}}\left(\frac{1}{c_T}-1\right)} \qquad \text{(eq. 30)}$$

in which

- $c_{k\tau}$ is the deviation parameter for activity or flow,
- $c_\theta$ is the deviation parameter for degree of coverage of ammonia,
- $c_T$ is the deviation parameter for deviation in catalyst temperature, and
- $E_A$ is the activation energy for reduction of $NO_X$.

A common feature of the deviation parameters is that the value one (1) means absence of deviation. For all of the deviation parameters other than degree of coverage of ammonia, this value indicates the factor by which the value used needs to be multiplied for it to correspond to the actual value. For degree of coverage of ammonia, the value two (2) minus the deviation parameter indicates the value by which the degree of coverage has to be raised for it to correspond to actual value.

According to an embodiment of the present invention, the estimation function for nitrogen oxides $f_{NO_x}$ comprises a first relation between a modelled concentration of carbon monoxide $NO$ downstream from the catalyst 110 and the sensor signal $\tilde{y}_{sensor}$ measured by the $NO_X$ sensor 131, and a second relation between a modelled concentration of nitrogen dioxide $NO_2$ downstream from the catalyst 110 and the sensor signal $\tilde{y}_{sensor}$ measured by the $NO_X$ sensor 131. The fact that the estimation function for nitrogen oxides $f_{NO_x}$ comprises these first and second relations, one of them pertaining to nitrogen monoxide $NO$, the other to nitrogen dioxide $NO_2$, makes it possible, by using this embodiment of the present invention, to arrive at respective separate estimates of the concentration of nitrogen monoxide $NO$ and nitrogen dioxide $NO_2$ downstream of the catalyst 110, which is advantageous in applications where the proportion of nitrogen dioxide $NO_2$ in the nitrogen oxides $NO_X$ upstream from the catalyst is high, which may lead to a significant concentration of nitrogen dioxide $NO_2$ downstream from the catalyst.

The at least two estimation functions further comprise, according to an embodiment of the present invention, an estimation function for ammonia $f_{NH_3}$ which relates a modelled concentration of ammonia $NH_3$ downstream of the catalyst to the sensor signal $\tilde{y}_{sensor}$ measured by the $NO_X$ sensor 131 and depends on an equilibrium between modelled adsorbed ammonia and modelled ammonia in gaseous form at an outlet end of the catalyst 110 which normally takes the form of the last tank in the catalyst 110. Using this estimation function for ammonia $f_{NH_3}$ according to the present invention makes it possible to arrive at a separate estimate of the concentration of ammonia $f_{NH_3}$ downstream of the catalyst 110, thereby providing information about conditions at the catalyst's outlet end.

The deviation function for ammonia may be derived from the equilibrium between adsorbed ammonia and ammonia in gaseous form in the last tank of the catalyst. The deviation function relates the catalyst model's value for ammonia $NH_3$ after the catalyst to actual value by deviation in temperature and degree of coverage of ammonia $NH_3$ as follows:

$$f_{NH_3} = y_{NH_3,K} \cdot \frac{\theta_{NH_3,k}{}^{1-c_\theta}}{1-\theta_{NH_3,k}{}^{1-c_\theta}} \cdot e^{-\frac{\Delta H}{R \cdot T_{s,K}}\left(\frac{1}{c_T}-1\right)} \qquad \text{(eq. 31)}$$

in which

- $c_\theta$ is the deviation parameter for degree of coverage of ammonia,
- $c_T$ is the deviation parameter for deviation in catalyst temperature, and
- $\Delta H$ is adsorption enthalpy for adsorption of ammonia $NH_3$.

According to an embodiment of the present invention, the estimation function for ammonia $f_{NH_3}$ relates a modelled concentration of ammonia $NH_3$ downstream from the catalyst 110 to the sensor signal $\tilde{y}_{sensor}$ measured by the $NO_X$ sensor 131. This is done by using at least one deviation parameter $c_\theta$ for degree of coverage of ammonia, and also, where appropriate, by using a deviation parameter $c_T$ for catalyst temperature. The separate estimate of the concentration of ammonia $NH_3$ downstream of the catalyst 110 can therefore, by this embodiment of the present invention, be corrected for errors in catalyst temperature and for errors in degree of coverage of ammonia.

According to an embodiment of the present invention, each of said at least two estimation functions depends on at least one model variable for the catalyst model. The respective estimation function for nitrogen oxides $f_{NO_x}$ and estimation function for ammonia $f_{NH_3}$ therefore each depend on one or more model variables. Such model variables may be one or more from among at least one input signal or output signal to said catalyst model, at least one condition for the catalyst model and at least internal variable for the catalyst model.

The sensor signal $\tilde{y}_{sensor}$ may further be described as an aggregate of the actual mole fractions for nitrogen oxides and ammonia as follows:

$$\tilde{y}_{sensor} = \tilde{y}_{NO_x} + \tilde{y}_{NH_3}. \qquad \text{(eq. 32)}$$

The respective actual concentration of nitrogen oxides $NO_X$ and actual concentration of ammonia $NH_3$ in this relationship may be expressed as the aggregate of an estimated value and a residual as follows:

$$\tilde{y}_{NO_x} = f_{NO_x}(c_1 ..., c_k) + \varepsilon \qquad \text{(eq. 33)}$$

$$\tilde{y}_{NH_3} = f_{NH_3}(c_1 ..., c_k) + \varepsilon \qquad \text{(eq. 34)}$$

in which

- $c_1,...,c_k$ is at least one deviation parameter, and
- $\varepsilon$ is a residual.

According to an embodiment of the present invention, this relationship is used by comparing the sensor signal $\tilde{y}_{sensor}$ measured by the $NO_X$ sensor 131 with the estimated signal by using the relationship

$$\tilde{y}_{sensor} = f_{NO_x}(c_1,...,c_k) + f_{NH_3}(c_1,...,c_k) + \varepsilon \qquad \text{(eq. 35)}$$

in which

- $f_{NO_x}(c_1,...,c_k) + f_{NH_3}(c_1,...,c_k)$ is the estimated signal,
- $c_1,...,c_k$ is the at least one deviation parameter which describes how well the model matches reality, where $k \geq 1$, and
- $\varepsilon$ is the residual.

Here the one or more deviation parameters $c_1,...,c_k$ may therefore for example take the form of at least one from among the deviation parameter $c_{NO_x}$ for concentration of nitrogen oxides $NO_X$, the deviation parameter $c_{k_\tau}$ for activity or flow, the deviation parameter $c_T$ for temperature and the deviation parameter $c_\theta$ for degree of coverage of ammonia.

According to an embodiment of the present invention, the at least one deviation parameter $c_1,...,c_k$ is determined by analysing which value of the at least one deviation parameter $c_1,...,c_k$ minimises the residual $\varepsilon$ in equation 35. The value of the at least one deviation parameter $c_1,...,c_k$ which minimises the residual $\varepsilon$ is adopted. This way of determining the value of the at least one deviation parameter $c_1,...,c_k$ may be applied effectively with use of little calculation capacity, since effective estimation algorithms can be used.

These effective estimation algorithms comprise filtration with a Kalman filter if equation 35 is linear. If equation 35 is non-linear, an extended Kalman filter or an unscented Kalman filter may be used for the filtration. The extended Kalman filter is preferably used where there are small non-linearities for equation 35, and the unscented Kalman filter is used if the non-linearities are large. An alternative to using Kalman filtration is to use a recursive least squares method. This recursive least squares method may be used if equation 35 is linear or moderately non-linear.

According to an embodiment of the present invention, the actual estimate of the separate concentration of nitrogen oxides $NO_X$ in the exhaust gases 130 downstream from the catalyst 110 is arrived at by calculating a function value of the estimation function for nitrogen oxides $f_{NO_x}$ for the at least one derived deviation parameter $c_1,...,c_k$. The one or more deviation parameters derived by comparison (equation 35) of the measured sensor signal $\tilde{y}_{sensor}$ with the estimated signal are therefore inserted in the estimation function for nitrogen oxides, resulting in a function value

$$\hat{y}_{NO_x} = f_{NO_x}(c_1...,c_k) \qquad\qquad \text{(eq. 36)}$$

The estimated value $\hat{y}_{NO_x}$ for mole fraction of nitrogen oxides $NO_X$ is therefore determined thereafter from the one or more current values derived for the deviation parameters $c_1,...,c_k$. This function value corresponds to the estimation of the separate concentration of nitrogen oxides $NO_X$ in the exhaust gases 130 downstream from the catalyst 110. This embodiment of the present invention arrives at the separate value desired in many implementations for the concentration of nitrogen oxides $NO_X$.

In a similar way, an embodiment of the present invention arrives at the actual estimate of the separate concentration of ammonia $NH_3$ in the exhaust gases 130 downstream from the catalyst 110 by calculating a function value of the estimation function for ammonia $f_{NH_3}$ for the at least one derived deviation parameter $c_1,...,c_k$ :

$$\hat{y}_{NH_3} = f_{NH_3}(c_1...,c_k) \qquad\qquad \text{(eq. 37)}$$

The estimated value $\hat{y}_{NH_3}$ for mole fraction of ammonia $NH_3$ is therefore determined thereafter from the one or more current values derived for the deviation parameters $c_1,...,c_k$. This function value corresponds to the estimation of the separate concentration of ammonia $NH_3$ in the exhaust gases 130 downstream from the catalyst 110. This embodiment of the present invention thus arrives at the separate value desired in many implementations for the concentration of ammonia $NH_3$.

The present invention comprises also a system 100, which may be implemented in a motor vehicle, for estimation of respective separate concentrations of nitrogen oxides $NO_X$ and ammonia $NH_3$ in exhaust gases downstream from the catalyst. The system is adapted to basing this estimation on the catalyst model described above and on the sensor signal $\tilde{y}_{sensor}$ measured by the $NO_X$ sensor 131 being situated downstream of the catalyst 110 and being cross-sensitive för ammonia $NH_3$. According to the present invention, the system comprises a means adapted to comparing the measured sensor signal $\tilde{y}_{sensor}$ with an estimated signal. The estimated signal depends here on at least two estimation functions and represents the catalyst model's match with the measured sensor signal $\tilde{y}_{sensor}$.

The system further comprises a means adapted to determining at least one deviation parameter for each of the at least two estimation functions by using the comparison of the measured sensor signal $\tilde{y}_{sensor}$ with the estimated signal. Each of the at least one deviation parameter describes a deviation for the catalyst model from reality.

The system comprises also a means adapted to estimating the respective separate concentrations of nitrogen oxides $NO_X$ and ammonia $NH_3$ by using the respective at least two estimation functions and the respective at least one deviation parameter. The at least two estimation functions comprise an estimation function for nitrogen oxides $f_{NO_x}$ and an estimation function for ammonia $NH_3$.

The system comprises, according to an embodiment of the invention, means adapted to using the respective estimates of the concentration of nitrogen oxides $NO_X$ and the concentration of ammonia $NH_3$ according to the invention for feedback in model-based urea regulation, for feedback in non-model based urea regulation, or for catalyst function diagnosis.

Specialists will appreciate that the catalyst system is also implementable in substantially all machines comprising an engine which produces exhaust gases, e.g. in watercraft.

Specialists will appreciate that a method for estimation of respective concentrations of nitrogen oxides $NO_X$ and concentrations of ammonia $NH_3$ according to the present invention may also be implemented in a computer programme which, when executed in a computer, causes the computer to apply the method. The computer programme is contained in a computer-readable medium of a computer programme product, which medium takes the form of a suitable memory, e.g. ROM (read-only memory), PROM (programmable read-only memory), EPROM (erasable PROM), flash memory, EEPROM (electrically erasable PROM), a hard disc unit, etc.

Figure 3 depicts schematically a control unit 160. The control unit 160 comprises a calculation unit 161 which may take the form of substantially any suitable type of processor or microcomputer, e.g. a circuit for digital signal processing (digital signal processor, DSP) or a circuit with a predetermined specific function (application specific integrated circuit, ASIC). The calculation unit 161 is connected to a memory unit 162 which is incorporated in the control unit 160 and which provides the calculation unit 161 with the regulating algorithm used, the catalyst model and, for example, the stored programme code and/or the stored data which the calculation unit 161 needs for it to be able to perform calculations. The calculation unit 161 is also adapted to storing partial or final results of calculations in the memory unit 162.

The control unit 160 is further provided with respective devices 163, 164, 165 for receiving input signals and sending output signals. These input and output signals may comprise waveforms, pulses or other attributes which the signal receiving devices 164, 165 can detect as information and which can be converted to signals processable by the calculation unit 161. The calculation unit 161 is then provided with these signals. The signal sending device 163 is adapted to converting signals received from the calculation unit 161 in order, e.g. by modulating them, to create output signals which can be transmitted to other parts of the system 100, e.g. to the operating means 140.

Each of the connections to the respective devices for receiving input signals and sending output signals may take the form of one or more from among a cable, a data bus, e.g. a CAN (controller area network) bus, an MOST (media orientated systems transport) bus or some other bus configuration, or a wireless connection. The connections between the sensors 122, 131 and the control unit 160 and between the operating means 140 and the control unit 160 depicted in Figure 1 may also take the form of one or more of these cables, buses or wireless connections.

Specialists will appreciate that the aforesaid computer may take the form of the calculation unit 161 and that the aforesaid memory may take the form of the memory unit 162.

Specialists will also appreciate that the above system can be modified according to the various embodiments of the method according to the invention. The present invention is not limited to its embodiments described above, but relates to and comprises all embodiments of the invention within the scope of protection of the attached independent claims.

**Description of variables in the catalyst model**

| Variable | List |
|---|---|
| $A_{ch,k}$ | Geometric area, tank k |
| $D_{eff,i,k}$ | Effective diffusivity, substance i, tank k |
| $D_{i,k}$ | Ordinary diffusivity, substance i, tank k |
| $D_{K,i,k}$ | Knudsen diffusivity, substance i, tank k |
| $D_{ref,i}$ | Reference diffusivity, substance i |
| $E_{A,j}$ | Activation energy, reaction j |
| $F$ | Molar flow, exhaust gases |
| $M_i$ | Molar mass, substance i |
| $N_c$ | Number of active seats |
| $Nu$ | Nusselt number |
| $P_k$ | Total pressure, tank k |
| $Q_{c,k}$ | Power output, reaction heat of catalytic reactions |
| $Q_{h,k}$ | Power output, reaction heat of homogeneous reactions |
| $R$ | General gas constant |
| $S$ | Active seat |
| $Sh$ | Sherwood number |
| $T_{ref}$ | Reference temperature |
| $T_{g,k}$ | Gas temperature, tank k |
| $T_{s,k}$ | Catalyst temperature, tank k |
| $V_k$ | Gas volume in catalyst duct, tank k |
| $c_{p,g}$ | Specific heat, gas |
| $c_{p,s}$ | Specific heat, catalyst |
| $c_{tot,k}$ | Total gas concentration, tank k |
| $d$ | Duct size |
| $d_p$ | Pore diameter |
| $f_D$ | Coefficient for porosity and pore convolution |

(continued)

| Variable | List |
|---|---|
| $h_k$ | Boundary layer heat transfer coefficient, tank k |
| $k_{c,i,k}$ | Boundary layer mass transfer coefficient, substance i, tank k |
| $k_{j,k}$ | Rate constant, reaction j, tank k |
| $k_{0,j}$ | Pre-exponential factor of reaction j |
| $m_{s,k}$ | Catalyst weight, tank k |
| $r_{c,j,k,n}$ | Reaction rate, catalytic reaction j, tank k, layer n |
| $r_{h,j,k}$ | Reaction rate, homogeneous reaction j, tank k |
| $t$ | Time |
| $y_{i,k,n}$ | Mole fraction, substance i, tank k, layer n |
| $w_{k,n}$ | Active material weight, tank k, layer n |
| $\Gamma_{i,k,n}$ | Mass transfer coefficient, substance i, tank k, layer n |
| $\Delta H_j$ | Reaction enthalpy, reaction j |
| $\Delta x_n$ | Thickness, layer n |
| $\lambda_g$ | Thermal conductivity of gas |
| $v_{i,j}$ | Stoichiometric coefficient, substance i, reaction j |
| $\theta_{k,n}$ | Degree of coverage (dimensionless accumulation), tank k, layer n |

**List of indices in the catalyst model**

```
Index     Meaning
K         Number of tanks / last tank
N         Number of layers / innermost layer
n=0       In the gas flow
a         Adsorption
d         Desorption
o         Ammonia oxidation
r         NOx reduction
u         Urea decomposition
```

**Claims**

1. A method for estimation of respective concentrations of nitrogen oxides $NO_X$ and concentrations of ammonia $NH_3$ in exhaust gases downstream from a catalyst (110), said estimation being based on a catalyst model and on a measured sensor signal $\tilde{y}_{sensor}$ from a nitrogen oxide sensor (131) which is cross-sensitive for ammonia $NH_3$ and is so situated that it comes into contact with said exhaust gases downstream of said catalyst (110), which method comprises:

   - comparing said measured sensor signal $\tilde{y}_{sensor}$ with an estimated signal which depends on at least two estimation functions and represents the catalyst model's match with said measured sensor signal $\tilde{y}_{sensor}$, which method is

   **characterised**

   - **by** using said comparison to determine at least one deviation parameter for the respective said at least two estimation functions, each of which said at least one deviation parameter describes a systematic deviation from reality for at least one input signal, one variable or one condition for said catalyst model, and

- by estimating respectively said concentrations of nitrogen oxides $NO_X$ and said concentrations of ammonia $NH_3$ on the basis of the respective said at least two estimation functions and said at least one deviation parameter, said at least two estimation functions comprising an estimation function for nitrogen oxides $f_{NO_x}$ and an estimation function for ammonia $NH_3$.

2. The method according to claim 1, in which each of said at least two estimation functions depends on at least one model variable from among the following:

   - at least one input signal to said catalyst model,
   - at least one output signal from said catalyst model,
   - at least one condition for said catalyst model,
   - at least one internal variable for said catalyst model, and
   - at least one deviation parameter.

3. The method according to either of claims 1 and 2, in which said at least two estimation functions comprise an estimation function for nitrogen oxides $f_{NO_x}$ which depends on a material balance for a modelled reaction in said catalyst model.

4. The method according to claim 3, in which said estimation function for nitrogen oxides $f_{NO_x}$ comprises:

   - a first relation between a modelled concentration of nitrogen monoxide $NO$ downstream of said catalyst (110) and said measured sensor signal $\tilde{y}_{sensor}$, and
   - a second relation between a modelled concentration of nitrogen dioxide $NO_2$ downstream of said catalyst (110) and said measured sensor signal $\tilde{y}_{sensor}$.

5. The method according to either of claims 3 and 4, in which said estimation function for nitrogen oxides $f_{NO_x}$ depends on at least:

   - a deviation parameter $c_{NO_x}$ for concentration of nitrogen oxides $NO_X$ upstream from said catalyst (110), and
   - a deviation parameter for a conversion.

6. The method according to claim 5, in which said deviation parameter for said conversion depends on at least:

   - a deviation parameter $c_{k\tau}$ for activity or flow,
   - a deviation parameter $c_T$ for temperature, and
   - a deviation parameter $c_\theta$ for degree of coverage of ammonia.

7. The method according to either of claims 1 and 2, in which at least said at least two estimation functions comprise a estimation function for ammonia $f_{NH_3}$ which depends on an equilibrium between modelled adsorbed ammonia and modelled ammonia in gaseous form at an outlet end of said catalyst (110).

8. The method according to claim 7, in which said estimation function for ammonia $f_{NH_3}$ relates a modelled concentration of ammonia $NH_3$ downstream from said catalyst (110) to said measured sensor signal $\tilde{y}_{sensor}$ by using at least

   - a deviation parameter $c_T$ for catalyst temperature, and
   - a deviation parameter $c_\theta$ for degree of coverage of ammonia.

9. The method according to any one of claims 1-8, in which said comparison of said measured sensor signal $\tilde{y}_{sensor}$ with said estimated signal uses the relationship

$$\widetilde{y}_{sensor} = f_{NO_x}\left(c_1,...,c_k\right) + f_{NH_3}\left(c_1,...,c_k\right) + \varepsilon$$

in which

   - $f_{NO_x}(c_1,...,c_k)+f_{NH_3}(c_1,...,c_k)$ is said estimated signal,

- $f_{NO_x}$ is an estimation function for nitrogen oxides $f_{NO_x}$ which relates a modelled concentration of nitrogen oxides $NO_X$ downstream of said catalyst (110) to said measured sensor signal $\tilde{y}_{sensor}$,
- $f_{NH_3}$ is an estimation function for ammonia $f_{NH_3}$ which relates a modelled concentration of ammonia $NH_3$ downstream of said catalyst (110) to said measured sensor signal $\tilde{y}_{sensor}$.
- $c_1,...,c_k$ is at least one deviation parameter which describes how well the model matches reality, where $k \geq 1$, and
- $\varepsilon$ is a residual.

10. The method according to claim 9, in which said determination of at least one deviation parameter $c_1,...,c_k$ is done by determining the at least one deviation parameter $c_1,...,c_k$ which minimises said residual $\varepsilon$.

11. The method according to claim 10, in which one of the following calculation methods is used for said determination:

- a calculation method using a Kalman filtration,
- a calculation method using an extended Kalman filtration,
- a calculation method using an unscented Kalman filtration, and
- a recursive least squares method.

12. The method according to any one of claims 1-11, in which said estimation of said concentration of nitrogen oxides $NO_X$ is arrived at by:

- function evaluation of an estimation function for nitrogen oxides $f_{NO_x}$, given said at least one deviation parameter determined $c_1,...,c_k$, which function evaluation results in a function value corresponding to said concentration of nitrogen oxides $NO_X$.

13. The method according to any one of claims 1-11, in which said estimation of said concentration of ammonia $NH_3$ is arrived at by:

- function evaluation of an estimation function for ammonia $f_{NH_3}$ given said at least one deviation parameter determined $c_1,...,c_k$, which function evaluation results in a function value corresponding to said concentration of ammonia $NH_3$.

14. The method for using an estimation of respective concentrations of nitrogen oxides $NO_X$ and concentrations of ammonia $NH_3$ arrived at according to any one of claims 1-13, which estimation is used for any of the following purposes:

- feedback in model-based urea regulation,
- feedback in urea regulation based on precontrol by use of tabulated values, and
- diagnosis of a function for said catalyst (110).

15. A system (100) for estimation of respective concentrations of nitrogen oxides $NO_X$ and concentrations of ammonia $NH_3$ in exhaust gases downstream from a catalyst (110), which system (100) is adapted to basing said estimation on a catalyst model and on a measured sensor signal $\tilde{y}_{sensor}$ from a nitrogen oxide sensor (131) which is cross-sensitive for ammonia $NH_3$ and is so situated that it comes into contact with said exhaust gases downstream of said catalyst (110), which system (100) comprises:

- a means adapted to comparing said measured sensor signal $\tilde{y}_{sensor}$ with an estimated signal which depends on at least two estimation functions and represents the catalyst model's match with said measured sensor signal $\tilde{y}_{sensor}$,

**characterised**

- **by** a means adapted to using said comparison to determine at least one deviation parameter for the respective said at least two estimation functions, each of which said at least one deviation parameter describes a systematic deviation from reality for at least one input signal, one variable or one condition for said catalyst model,
- and by a means adapted to estimating respective said concentrations of nitrogen oxides $NO_X$ and said concentrations of ammonia $NH_3$ on the basis of the respective said at least two estimation functions and said at least one deviation parameter, said at least two estimation functions comprising an estimation function for nitrogen oxides $f_{NO_x}$ and an estimation function for ammonia $NH_3$.

**Patentansprüche**

1.  Verfahren zur Abschätzung jeweiliger Konzentrationen von Stickoxiden $NO_x$ und Konzentrationen von Ammoniak $NH_3$ in Abgasen stromabwärts eines Katalysators (110), wobei die Abschätzung auf einem Katalysatormodell und auf einem gemessenen Sensorsignal $\tilde{y}_{sensor}$ von einem Stickoxidsensor (131) basiert, der für Ammoniak $NH_3$ querempfindlich ist und so angeordnet ist, dass er mit den Abgasen stromabwärts des Katalysators (110) in Kontakt kommt, wobei das Verfahren umfasst:

    - Vergleichen des gemessenen Sensorsignals $\tilde{y}_{sensor}$ mit einem geschätzten Signal, das von wenigstens zwei Abschätzungsfunktionen abhängt und die Übereinstimmung des Katalysatormodells mit dem gemessenen Sensorsignal $\tilde{y}_{sensor}$ darstellt, wobei das Verfahren

    **gekennzeichnet ist durch**

    - Verwenden des Vergleichs zum Ermitteln wenigstens eines Abweichungsparameters für die entsprechende der wenigstens zwei Abschätzungsfunktionen, wobei jeder des wenigstens einen Abweichungsparameters eine systematische Abweichung von der Realität für zumindest ein Eingangssignal, eine Variable oder eine Bedingung für das Katalysatormodell beschreibt, und
    - jeweiliges Abschätzen der Konzentrationen von Stickoxiden $NO_X$ und der Konzentrationen von Ammoniak $NH_3$ basierend auf den entsprechenden wenigstens zwei Abschätzungsfunktionen und dem wenigstens einen Abweichungsparameter, wobei die wenigstens zwei Abschätzungsfunktionen eine Abschätzungsfunktion für Stickoxide $f_{NO_x}$ und eine Abschätzungsfunktion für Ammoniak $NH_3$ umfassen.

2.  Verfahren nach Anspruch 1, bei dem jede der wenigstens zwei Abschätzungsfunktionen von zumindest einer Modellvariablen aus den Folgenden abhängt:

    - zumindest ein Eingangssignal in das Katalysatormodell,
    - zumindest ein Ausgangssignal aus dem Katalysatormodell,
    - zumindest eine Bedingung für das Katalysatormodell,
    - zumindest eine interne Variable für das Katalysatormodell, und
    - zumindest ein Abweichungsparameter.

3.  Verfahren nach Anspruch 1 oder 2, bei dem die wenigstens zwei Abschätzungsfunktionen eine Abschätzungsfunktion für Stickoxide $f_{NO_x}$ umfassen, die von einer Mengenbilanz für eine modellierte Reaktion in dem Katalysatormodell abhängt.

4.  Verfahren nach Anspruch 3, bei dem die Abschätzungsfunktion für Stickoxide $f_{NO_x}$ umfasst:

    - eine erste Beziehung zwischen einer modellierten Konzentration von Stickstoffmonoxid NO stromabwärts des Katalysators (110) und dem gemessenen Sensorsignal $\tilde{y}_{sensor}$, und
    - eine zweite Beziehung zwischen einer modellierten Konzentration von Stickstoffdioxid $NO_2$ stromabwärts des Katalysators (110) und dem gemessenen Sensorsignal $\tilde{y}_{sensor}$.

5.  Verfahren nach Anspruch 3 oder 4, bei dem die Abschätzungsfunktion für Stickoxide $f_{NO_x}$ abhängt von zumindest:

    - einem Abweichungsparameter $c_{NO_x}$ für eine Konzentration von Stickoxiden $NO_x$ stromaufwärts des Katalysators (110), und
    - einem Abweichungsparameter für eine Umwandlung.

6.  Verfahren nach Anspruch 5, bei dem der Abweichungsparameter für die Umwandlung abhängt von zumindest:

    - einem Abweichungsparameter $c_{k\tau}$ für Aktivität oder Durchfluss,
    - einem Abweichungsparameter $c_T$ für Temperatur, und
    - einem Abweichungsparameter $c_\theta$ für einen Ammoniakabdeckungsgrad.

7.  Verfahren nach Anspruch 1 oder 2, bei dem die wenigstens zwei Abschätzungsfunktionen eine Abschätzungsfunktion für Ammoniak $f_{NH_3}$ umfassen, die von einem Gleichgewicht zwischen modelliert adsorbiertem Ammoniak und modelliertem gasförmigen Ammoniak an einem Auslassende des Katalysators (110) abhängt.

**8.** Verfahren nach Anspruch 7, bei dem die Abschätzungsfunktion für Ammoniak $f_{NH3}$ eine modellierte Konzentration von Ammoniak NH$_3$ stromabwärts des Katalysators (110) in Beziehung zu dem gemessenen Sensorsignal $\tilde{y}_{sensor}$ setzt durch Verwenden von zumindest

- einem Abweichungsparameter $c_T$ für eine Katalysatortemperatur, und
- einem Abweichungsparameter ce für einen Ammoniakabdeckungsgrad.

**9.** Verfahren nach einem der Ansprüche 1 bis 8, bei dem der Vergleich des gemessenen Sensorsignals $\tilde{y}_{sensor}$ mit dem abgeschätzten Signal die Beziehung

$$\tilde{y}_{sensor} = f_{NO_x}(c_1,...,c_k) + f_{NH3}(c_1,...,c_k) + \varepsilon$$

verwendet, in der

- $f_{NO_x}(c_1,...,c_k) + f_{NH3}(c_1,...,c_k)$ das abgeschätzte Signal ist,
- $f_{NO_x}$ eine Abschätzungsfunktion für Stickoxide $f_{NO_x}$ ist, die eine modellierte Konzentration von Stickoxiden NO$_x$ stromabwärts des Katalysators (110) in Beziehung zu dem gemessenen Sensorsignal $\tilde{y}_{sensor}$ setzt,
- $f_{NH3}$ eine Abschätzungsfunktion für Ammoniak $f_{NH3}$ ist, die eine modellierte Konzentration von Ammoniak NH$_3$ stromabwärts des Katalysators (110) in Beziehung zu dem gemessenen Sensorsignal $\tilde{y}_{sensor}$ setzt,
- $c_1,...,c_k$ zumindest ein Abweichungsparameter ist, der beschreibt, wie gut das Modell mit der Realität über-einstimmt, wobei $k \geq 1$, und
- $\varepsilon$ ein Residuum ist.

**10.** Verfahren nach Anspruch 9, bei dem die Bestimmung wenigstens eines Abweichungsparameters $c_1,...,c_k$ erfolgt durch Ermitteln des zumindest einen Abweichungsparameters $c_1,...,c_k$, der das Residuum $\varepsilon$ minimiert.

**11.** Verfahren nach Anspruch 10, bei dem eines der folgenden Berechnungsverfahren für die Bestimmung verwendet wird:

- ein Berechnungsverfahren, welches eine Kalman-Filterung verwendet,
- ein Berechnungsverfahren, welches eine erweiterte Kalman-Filterung verwendet,
- ein Berechnungsverfahren, welches eine neutrale Kalman-Filterung (unscented Kalman filtration) verwendet, und
- ein rekursives Verfahren der kleinsten Fehlerquadrate.

**12.** Verfahren nach einem der Ansprüche 1 bis 11, bei dem die Abschätzung der Konzentration von Stickoxiden NO$_x$ erzielt wird durch:

- eine Funktionsauswertung einer Abschätzungsfunktion für Stickoxide $f_{NO_x}$ mit dem wenigstens einen ermittelten Abweichungsparameter $c_1,...,c_k$, wobei die Funktionsauswertung zu einem der Konzentration von Stickoxiden NO$_x$ entsprechenden Funktionswert führt.

**13.** Verfahren nach einem der Ansprüche 1 bis 11, bei dem die Abschätzung der Konzentration von Ammoniak NH$_3$ erzielt wird durch:

- eine Funktionsauswertung einer Abschätzungsfunktion für Ammoniak $f_{NH3}$ mit dem wenigstens einen ermittelten Abweichungsparameter $c_1,...,c_k$, wobei die Funktionsauswertung zu einem der Konzentration von Ammoniak NH$_3$ entsprechenden Funktionswert führt.

**14.** Verfahren zur Verwendung einer Abschätzung jeweiliger Konzentrationen von Stickoxiden NO$_x$ und Konzentrationen von Ammoniak NH$_3$ erzielt gemäß einem der Ansprüche 1 bis 13, wobei die Abschätzung verwendet wird für jeglichen der folgenden Zwecke:

- eine Rückkopplung in einer modellbasierten Harnstoffregelung,
- eine Rückkopplung in einer Harnstoffregelung, die auf einer Vorsteuerung mittels tabellierter Werte basiert, und
- eine Diagnose einer Funktion für den Katalysator (110).

**15.** System (100) zur Abschätzung jeweiliger Konzentrationen von Stickoxiden $NO_x$ und Konzentrationen von Ammoniak $NH_3$ in Abgasen stromabwärts eines Katalysators (110), wobei das System (100) dazu eingerichtet ist, die Abschätzung basierend auf einem Katalysatormodell und auf einem gemessenen Sensorsignal $\tilde{y}_{sensor}$ von einem Stickoxidsensor (131) vorzunehmen, der querempfindlich für Ammoniak $NH_3$ ist und so angeordnet ist, dass er mit den Abgasen stromabwärts des Katalysators (110) in Kontakt kommt, wobei das System (100) aufweist:

- eine Einrichtung, die zum Vergleichen des gemessenen Sensorsignals $\tilde{y}_{sensor}$ mit einem abgeschätzten Signal eingerichtet ist, das von wenigstens zwei Abschätzungsfunktionen abhängt und die Übereinstimmung des Katalysatormodells mit dem gemessenen Sensorsignal $\tilde{y}_{sensor}$ darstellt,

**gekennzeichnet durch**

- eine Einrichtung, welche dazu ausgeführt ist, den Vergleich dazu zu verwenden, wenigstens einen Abweichungsparameter für die entsprechende der wenigstens zwei Abschätzungsfunktionen zu ermitteln, wobei jeder des wenigstens einen Abweichungsparameters eine systematische Abweichung von der Realität für zumindest ein Eingangssignal, eine Variable oder eine Bedingung für das Katalysatormodell beschreibt,
- und eine Einrichtung, welche dazu ausgeführt ist, die jeweiligen Konzentrationen von Stickoxiden $NO_x$ und die Konzentrationen von Ammoniak $NH_3$ auf der Basis der entsprechenden der wenigstens zwei Abschätzungsfunktionen und dem wenigstens einen Abweichungsparameter zu bestimmen, wobei die wenigstens zwei Abschätzungsfunktionen eine Abschätzungsfunktion für Stickoxide $f_{NO_x}$ und eine Abschätzungsfunktion für Ammoniak $f_{NH_3}$ umfassen.

## Revendications

**1.** Procédé pour l'estimation des concentrations respectives d'oxydes d'azote *NOx* et des concentrations d'ammoniac *NH₃* dans des gaz d'échappement en aval d'un catalyseur (110), ladite estimation étant sur base d'un modèle de catalyseur et sur un signal de capteur mesuré $\tilde{y}_{capteur}$ à partir d'un capteur d'oxyde d'azote (131) qui est réticulé pour l'ammoniac *NH₃* et est donc situé de sorte qu'il entre en contact avec lesdits gaz d'échappement en aval dudit catalyseur (110), lequel procédé comprend :

- la comparaison ledit signal de capteur mesuré $\tilde{y}_{capteur}$ avec un signal estimé qui dépend d'au moins deux fonctions d'estimation et représente la correspondance du modèle de catalyseur avec ledit signal de capteur mesuré $\tilde{y}_{capteur,}$ lequel procédé est

**caractérisé**

- **par** l'utilisation de ladite comparaison pour déterminer au moins un paramètre d'écart pour lesdites au moins deux fonctions d'estimation respectives, chacun desdits au moins un paramètre d'écart décrit un écart systématique de la réalité pour au moins un signal d'entrée, une variable ou une condition pour ledit modèle de catalyseur, et
- par l'estimation respectivement desdites concentrations d'oxydes d'azote *NOx* et desdites concentrations d'ammoniac *NH₃* sur base des au moins deux fonctions d'estimation respectives et dudit au moins un paramètre d'écart, lesdites au moins deux fonctions d'estimation comprenant une fonction d'estimation pour des oxydes d'azote $f_{NOx}$ et une fonction d'estimation pour l'ammoniac *NH₃*.

**2.** Procédé selon la revendication 1, dans lequel chacune desdites au moins deux fonctions d'estimation dépend d'au moins une variable de modèle parmi les éléments suivants :

- au moins un signal d'entrée audit modèle de catalyseur,
- au moins un signal de sortie dudit modèle de catalyseur,
- au moins une condition pour ledit modèle de catalyseur,
- au moins une variable interne pour ledit modèle de catalyseur, et
- au moins un paramètre d'écart.

**3.** Procédé selon l'une ou l'autre des revendications 1 et 2, dans lequel lesdites au moins deux fonctions d'estimation comprennent une fonction d'estimation pour les oxydes d'azote $f_{NOx}$ qui dépend d'un équilibre de matériau pour une réaction modélisée dans ledit modèle de catalyseur.

4. Procédé selon la revendication 3, dans lequel ladite fonction d'estimation pour les oxydes d'azote $f_{NOx}$ comprend :

- une première relation entre une concentration modélisée de monoxyde d'azote $NO$ en aval dudit catalyseur (110) et dudit signal de capteur mesuré $\tilde{y}_{capteur}$, et
- une seconde relation entre une concentration modélisée du dioxyde d'azote $NON_2$ en aval dudit catalyseur (110) et dudit signal de capteur mesuré $\tilde{y}_{capteur}$.

5. Procédé selon l'une quelconque des revendications 3 et 4, dans lequel ladite fonction d'estimation pour les oxydes d'azote $f_{NOx}$ dépend d'au moins :

- un paramètre d'écart $c_{N0}$ pour une concentration d'oxydes d'azote $NOx$ en amont dudit catalyseur (110), et
- un paramètre d'écart pour une conversion.

6. Procédé selon la revendication 5, dans lequel ledit paramètre d'écart pour ladite conversion dépend d'au moins :

- un paramètre d'écart $c_{k\Pi}$ pour l'activité ou le flux,
- un paramètre d'écart $c_T$ pour la température, et
- un paramètre d'écart ce pour le degré de couverture de l'ammoniac.

7. Procédé selon l'une ou l'autre des revendications 1 et 2, dans lequel au moins lesdites au moins deux fonctions d'estimation comprennent une fonction d'estimation pour l'ammoniac $f_{NH3}$ qui dépend d'un équilibre entre l'ammoniac adsorbé modélisé et l'ammoniac modélisé sous forme gazeuse à une extrémité de sortie dudit catalyseur (110).

8. Procédé selon la revendication 7, dans lequel ladite fonction d'estimation pour l'ammoniac $f_{NH3}$ concerne une concentration modélisée d'ammoniac $NH_3$ en aval dudit catalyseur (110) audit signal de capteur mesuré $\tilde{y}_{capteur}$ à l'aide d'au moins

- un paramètre d'écart $c_T$ pour la température du catalyseur, et
- un paramètre d'écart ce pour le degré de couverture de l'ammoniac.

9. Procédé selon l'une quelconque des revendications 1-8, dans lequel ladite comparaison dudit signal de capteur mesuré $\tilde{y}_{capteur}$ avec ledit signal estimé utilise la relation

$$\tilde{y}\ capteur = f_{NOX}\ (c_1, \ldots, c_k) + f_{NH3}\ (c_1, \ldots, c_k) + \mathcal{E}$$

dans laquelle

- $f_{NOX}(c_1, \ldots, c_k) + f_{NH3}(c_1, \ldots, c_k)$ est le signal estimé,
- $f_{NOX}$ est une fonction d'estimation pour les oxydes d'azote $f_{NOX}$ qui se rapporte à une concentration modélisée d'oxydes d'azote $NOx$ en aval dudit catalyseur (110) audit signal de capteur mesuré $\tilde{y}_{capteur}$,
- $f_{NH3}$ est une fonction d'estimation pour l'ammoniac $f_{NH3}$ qui se rapporte à une concentration modélisée d'ammoniac $NH_3$ en aval dudit catalyseur (110) audit signal de capteur mesuré $\tilde{y}_{capteur}$
- $c_1, \ldots, c_k$ est au moins un paramètre d'écart qui décrit dans quelle mesure le modèle correspond à la réalité, où $k \geq 1$, et
- $\varepsilon$ est un résiduel.

10. Procédé selon la revendication 9, dans lequel ladite détermination d'au moins un paramètre d'écart $c_1, \ldots, c_k$ est effectué par la détermination de l'au moins un paramètre d'écart $c_1, \ldots, c_k$ qui minimise ledit résiduel $\varepsilon$.

11. Procédé selon la revendication 10, dans lequel l'un des procédés de calcul suivants est utilisé pour ladite détermination" :

- un procédé de calcul utilisant une filtration Kalman,
- un procédé de calcul utilisant une filtration étendue de Kalman,
- un procédé de calcul utilisant une filtration inodore de Kalman, et
- un procédé récursif des moindres carrés.

**12.** Procédé selon l'une quelconque des revendications 1-11, dans lequel ladite estimation de ladite concentration d'oxydes d'azote *NOx* y est arrivée par :

- une fonction d'évaluation d'une fonction d'estimation pour les oxydes d'azote $f_{NOx}$, étant donné ledit au moins un paramètre d'écart déterminé $c_1,...,c_k$, laquelle évaluation de fonction résulte en une valeur de fonction correspondant à ladite concentration d'oxydes d'azote *NOx.*

**13.** Procédé selon l'une quelconque des revendications 1-11, dans lequel ladite estimation de ladite concentration d'ammoniac $NH_3$ est y arrivée par :

- une fonction d'évaluation d'une fonction d'estimation pour l'ammoniac $f_{NH3}$ étant donné ledit au moins un paramètre d'écart déterminé $c_1,...,c_k$, laquelle évaluation de fonction résulte en une valeur de fonction correspondant à ladite concentration d'ammoniac *NH3.*

**14.** Le procédé pour une utilisation d'une estimation des concentrations respectives d'oxydes d'azote *NOx* et des concentrations d'ammoniac $NH_3$ y est arrivé selon l'une quelconque des revendications 1-13, laquelle estimation est utilisée pour l'une quelconque des finalités suivantes :

- le retour d'information dans la réglementation d'urée sur base d'un modèle,
- le retour d'information dans la réglementation d'urée sur base d'un précontrôle par l'utilisation de valeurs sous forme de tableau, et
- un diagnostic d'une fonction pour ledit catalyseur (110).

**15.** Système (100) pour une estimation des concentrations respectives d'oxydes d'azote $NO_x$ et des concentrations d'ammoniac $NH_3$ dans des gaz d'échappement en aval d'un catalyseur (110), lequel système (100) est adapté pour baser ladite estimation sur un modèle de catalyseur et sur un signal de capteur mesuré $\tilde{y}_{capteur}$ à partir d'un capteur d'oxyde d'azote (131) qui est réticulé pour l'ammoniac $NH_3$ et est donc situé de sorte qu'il entre en contact avec lesdits gaz d'échappement en aval dudit catalyseur (110), lequel système (100) comprend :

- un moyen adapté à la comparaison dudit signal de capteur mesuré $\tilde{y}_{capteur}$ avec un signal estimé qui dépend d'au moins deux fonctions d'estimation et représente la correspondance de modèle de catalyseur avec ledit signal de capteur mesuré $\tilde{y}_{capteur}$,

**caractérisé**

- **par** un moyen adapté à l'utilisation de ladite comparaison pour déterminer au moins un paramètre d'écart pour lesdites au moins deux fonctions d'estimation respectives, chacun desdits au moins un paramètre d'écart décrit un écart systématique de la réalité pour au moins un signal d'entrée, une variable ou une condition pour ledit modèle de catalyseur,
- et par un moyen adapté à l'estimation desdites concentrations d'oxydes d'azote *NOx* et desdites concentrations d'ammoniac $NH_3$ sur base des au moins deux fonctions d'estimation respectives et dudit au moins un paramètre d'écart, lesdites au moins deux fonctions d'estimation comprenant une fonction d'estimation pour des oxydes d'azote $f_{NOx}$ et une fonction d'estimation pour l'ammoniac $NH_3$.

Fig. 1

201

Compare measured sensor signal $\tilde{y}_{sensor}$ with an estimated signal

202

Determine at least one deviation parameter for each of the at least two estimation functions

203

Estimation of the respective concentrations of nitrogen oxides $NO_X$ and ammonia $NH_3$

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• DE 10301606 A1

**Non-patent literature cited in the description**

• **DEVARAKONDA M.** *Model-based control system design in a urea-SCR aftertreatment system based on NH3 sensor feedback*